# EUROPEAN PATENT SPECIFICATION

(11) **EP 1 902 878 B1**
(45) Date of publication and mention of the grant of the patent: **11.03.2009**
(21) Application number: 06425651.4
(22) Date of filing: 22.09.2006
(51) Int. Cl.: B60H 3/06

(54) **Air filter assembly for vehicles**
Luftfilteranordnung eines Kraftfahrzeugs
Ensemble de filtre à air pour véhicule

(43) Date of publication of application: 26.03.2008
(73) Proprietor: DENSO THERMAL SYSTEMS S.p.A., 10046 Poirino (Torino) (IT)
(72) Inventor: Ferrarese, Claudio, 10046 Poirino (Torino) (IT)
(74) Representative: Marchitelli, Mauro

(56) References cited:
- DE-A1- 3 834 942
- DE-A1- 10 320 260
- US-A- 5 385 378

## Description

The present invention relates to an air filter assembly for air conditioning/heating for vehicles.

An air treatment system for vehicles normally comprises a case forming a chamber for treating an air flow, connected to an inlet conduit wherein is mounted a fan. In the air flow treatment chamber are housed a radiator for heating the air flow, an evaporator comprised in an air conditioning system and an air filter. The filter is usually arranged in a vertical or substantially vertical plane and it is positioned facing the evaporator, upstream thereof with reference to the direction of the air flow.

In many cases, there is the problem of the limited space available to replace the air filter. The space available for the removal of the filter is limited because generally, on a first side of the case are positioned the pipes feeding the heating radiator and on the opposite side are positioned the pipes feeding the evaporator. In these cases, the air filter is usually constituted by an upper part and lower part separated from each other, which are removed and reinstalled separately in mutually superposed positions. The opening for the insertion and the extraction of the filter has an extension in height that is equal to or slightly greater than the height of each of the two sections of the filter.

In such cases, mounting the filter requires the following operations: inserting the upper section, moving the upper section upwards and inserting the lower section underneath the upper section of the filter. To insert the lower section, it is necessary to keep the upper section of the filter raised.

Furthermore, there is known from DE 103 20 260 A1 an air filter assembly upon which the preamble of appending claim 1 is based.

The object of the present invention is to provide an air filter assembly for vehicles that enables to make simpler and easier the operation of mounting an air filter constituted by two separated sections, superposed in a vertical plane.

According to the present invention, said object is achieved by an air filter assembly having the characteristics set out in claim 1.

The present invention shall now be described in detail with reference to the accompanying drawings, provided purely by way of non limiting example, in which:
- Figure 1 is a schematic perspective view of an air filter assembly according to the present invention,
- Figure 2 is a schematic front view of the air filter assembly of Figure 1,
- Figure 3 is a front view showing the removal of the upper section of the filter, and
- Figure 3A is a schematic detail of the part indicated by the arrow III in Figure 2.

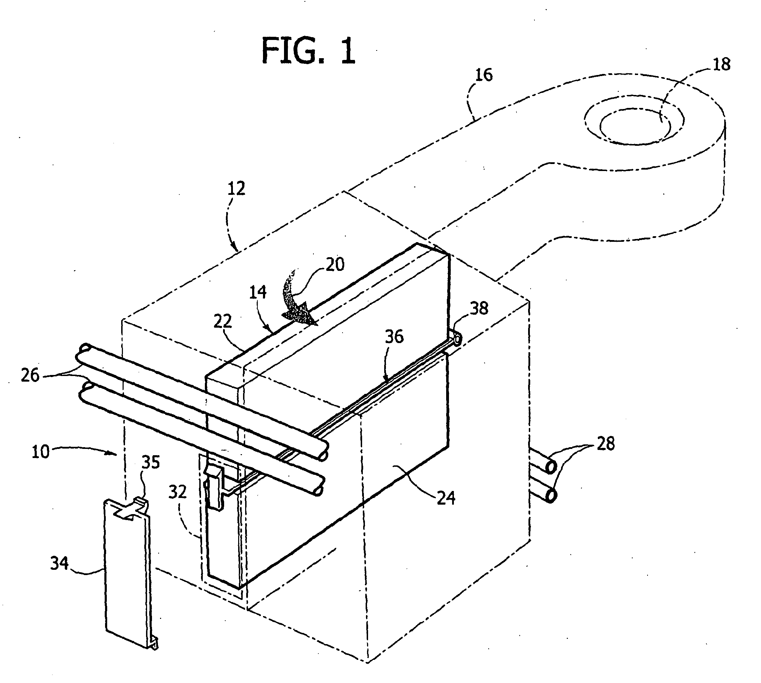

With reference to the figures, the numeral 10 designates a filter assembly for an air treatment system for vehicles. The filter assembly 10 is incorporated in a case 12 that defines within its interior a chamber for treating the air flow in which is housed an air filter 14. Inside the case 12 are mounted a radiator for heating the air flow and an evaporator comprised in the air conditioning system of the vehicle. The arrangement of the heating radiator and of the evaporator is known in itself and it is outside the scope of the present invention. The case 12 communicates with a conduit 16 for feeding the air flow in which is housed a centrifugal fan 18. The fan 18 produces an air flow that reaches the treatment chamber and traverses the filter 14 in the direction indicated by the arrow 20 in Figure 1.

In Figures 1 through 3, the numerals 26 and 28 indicate the tubes for feeding the respective heat exchange fluids to the heating radiator and to the evaporator. The tubes 26, 28 extend along opposite lateral flanks of the case 12 and constitute bulks that reduce the dimensions of the free region where it is possible to obtain an opening for the removal of the filter 14.

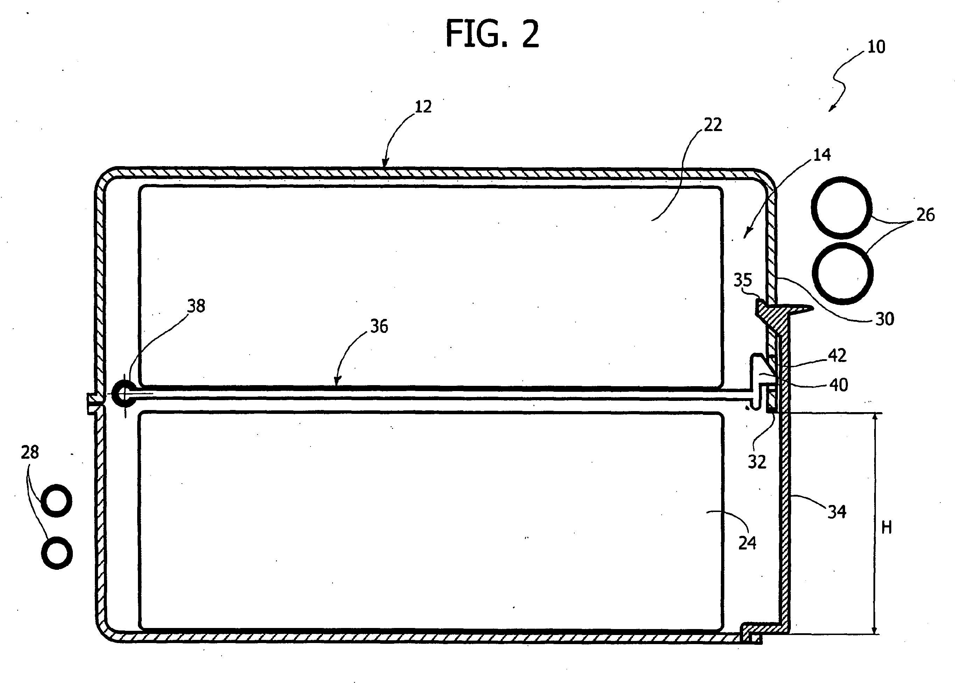

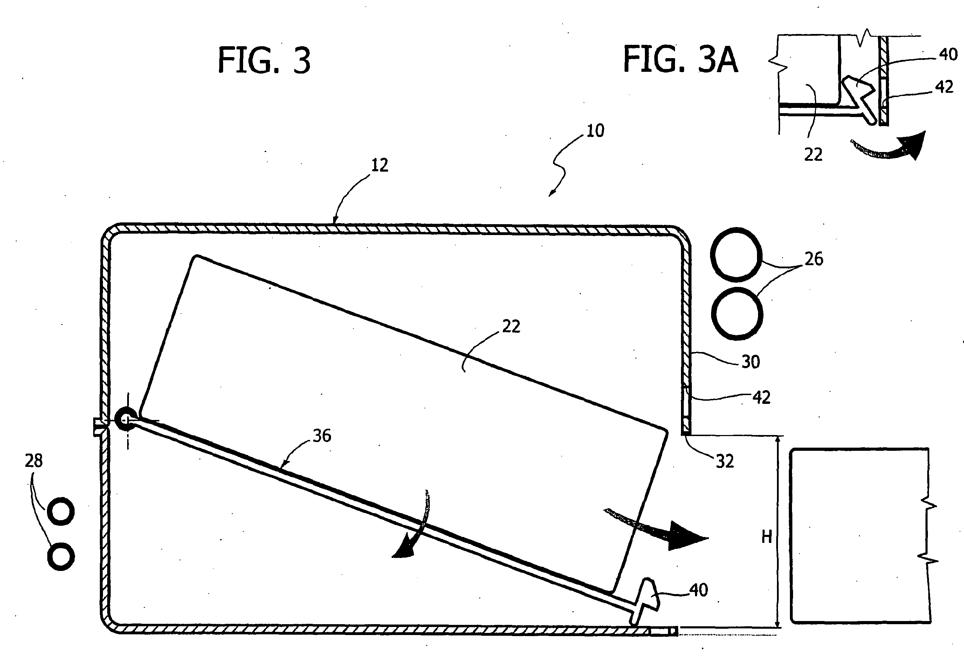

With reference in particular to Figures 2 and 3, the case 12 is provided on a lateral wall 30 with an opening 32 for the removal of the filter 14.

The opening 32 is closed by a removable lid 34 fastened to the wall 30 by means of a snap-in engagement tooth 35 or by means of screws. The opening 32 has a lesser height than the total height of the filter 14 and it is obtained in a region of the wall 30 that is free from the bulk of the tubes 26.

The presence of the tubes 26 and 28 on the flanks of the case 12 prevents from forming an opening 32 with a height equal to the total height of the filter 14. For this reason, the filter 14 is constituted by an upper section 22 and by a lower section 24, mutually superposed in a vertical plane. The two sections are mutually separate and independent and they are preferably constituted by two identical panels with a flattened parallelepiped shape, mutually superposed in a plane that is parallel to their main faces. Each of the two sections 22, 24 has a height that is equal to or smaller than the height H of the opening 32.

The filter assembly according to the present invention comprises a support element 36 that supports the upper section 22 of the filter 14. The support element 36 has substantially the shape of a strip having an upper face whereon bears the lower side of the upper section 22. The support element 36 is hinged to the case 12 in an area 38 situated in the vicinity of a lateral wall opposite to the wall 30 in which is formed the opening 32. On the opposite side from the articulation region 38, the support element 36 is provided with a hook 40 that engages in snap-in fashion a seat 42 provided on the wall 30. The support element 36 extends between the sides of the sections 22, 24 that face each other. The length of the support element 36 is greater than the length of the sections 22, 24, so that the articulation region 38 and the hook 40 are situated laterally to the exterior of the filter 14.

With reference to Figures 2 and 3, to remove the filter 14 the lid 34 is removed and the lower section 24 of the filter 14 is extracted through the opening 32. Then, the hook 40 is disengaged from the seat 32 as shown schematically in Figure 3A and the support element 36 is lowered as shown in Figure 3. At this point, the upper section 22 of the filter 14 is extracted through the opening 32.

To install a new filter 14, the support element 36 is placed in the lowered position shown in Figure 3, the upper section 22 of the new filter is inserted through the opening 32 and the support element 36 is lifted. The support element 36 is locked in raised position by the engagement between the hook 40 and the seat 42. Then, the lower section 24 is inserted through the opening 32 and the lid 34 is fastened to the case 12.

The support element 36 enables to simplify considerably the installation of a new filter, because it eliminates the need to manually keep the upper section 22 in a raised position during the insertion of the lower section 24.

## Claims

1. Air filter assembly for vehicles, comprising:
- a case (12) defining an air flow treatment chamber,
- an air filter (14) housed within said case (12), wherein the air filter (14) comprises an upper section (22) and a lower section (24), mutually separate and superposed in a vertical plane, and
- an opening (32) for the insertion and the removal of the filter (14), having a height (H) that is smaller than the total height of the filter (14),
**characterised in that** it comprises a support element (36) positioned between the mutually facing sides of the upper section (22) and of the lower section (24) and movable between a raised position in which it supports the upper section (22) and a lowered position for insertion and extraction through the opening (32) of the upper section (22).

2. Air filter assembly as claimed in claim 1, **characterised in that** the support element (36) is articulated to the case (12) in a region (38) that is opposite to the wall (30) of the case (12) in which said opening is formed (32).

3. Air filter assembly as claimed in claim 1, **characterised in that** the support element (36) is provided with a hook (40) able to engage a seat (42) formed in a wall (30) in which said opening (32) is formed.

## Patentansprüche

1. Luftfilteranordnung für Kraftfahrzeuge, enthaltend:
- ein Gehäuse (12), das eine Luftstromaufbereitungskammer definiert,
- einen Luftfilter (14), der sich in diesem Gehäuse (12) befindet, wobei der Luftfilter (14) einen oberen Abschnitt (22) und einen unteren Abschnitt (24) enthält, die voneinander getrennt und in einer vertikalen Ebene überlagert sind, und
- eine Öffnung (32) zum Einsetzen und Entnehmen des Filters (14), die eine Höhe (H) hat, die kleiner ist als die Gesamthöhe des Filters (14),
**dadurch gekennzeichnet, dass** sie ein Halteelement (36) enthält, das zwischen den einander zugewandten Seiten des oberen Abschnittes (22) und des unteren Abschnittes (24) angeordnet ist und zwischen einer angehobenen Position, in der es den oberen Abschnitt (22) hält, und einer abgesenkten Stellung zum Einfügen und Herausziehen durch die Öffnung (32) des oberen Abschnittes (22) bewegt werden kann.

2. Luftfilteranordnung nach Anspruch 1, **dadurch gekennzeichnet, dass** das Halteelement (36) am Gehäuse (12) in einem Bereich (38) gelenkig gelagert ist, der der Wand (30) des Gehäuses (12) gegenüberliegt, in der die Öffnung (32) ausgebildet ist.

3. Luftfilteranordnung nach Anspruch 1, **dadurch gekennzeichnet, dass** das Halteelement (36) mit einem Haken versehen ist (40), der in der Lage ist, in einen Sitz (42) einzugreifen, der in einer Wand (30) ausgebildet ist, in der die Öffnung (32) ausgebildet ist.

## Revendications

1. Ensemble de filtre à air pour véhicules, comprenant :
un boîtier (12) définissant une chambre de traitement d'écoulement d'air,
un filtre à air (14) logé à l'intérieur dudit boîtier (12), dans lequel le filtre à air (14) comprend une section supérieure (22) et une section inférieure (24) mutuellement séparées et superposées dans un plan vertical, et
une ouverture (32) pour l'insertion et le retrait du filtre (14), ayant une hauteur (H) qui est plus petite que la hauteur total du filtre (14),
**caractérisé en ce qu'**il comprend un élément de support (36) positionné entre les côtés se faisant mutuellement face de la section supérieure (22) et de la section inférieure (24) et mobile entre une position relevée dans laquelle il supporte la section supérieure (22) et une position abaissée pour l'insertion et l'extraction à travers l'ouverture (32) de la section supérieure (22).

2. Ensemble de filtre à air selon la revendication 1, **caractérisé en ce que** l'élément de support (36) est articulé par rapport au boîtier (12) dans une région (38) qui est opposée à la paroi (30) du boîtier (12) dans laquelle ladite ouverture (32) est formée.

3. Ensemble de filtre à air selon la revendication 1, **caractérisé en ce que** l'élément de support (36) est doté d'un crochet (40) pouvant mettre en prise un siège (42) formé dans une paroi (30) dans laquelle ladite ouverture (32) est formée.
